# EUROPEAN PATENT APPLICATION

(11) **EP 1 326 040 A1**
(43) Date of publication of application: **09.07.2003**
(21) Application number: 02080411.8
(22) Date of filing: 20.12.2002
(51) Int. Cl.: F16K 35/10

(54) **Security device**

(30) Priority: 08.01.2002 IT RE20020001
(71) Applicant: Marconi S.r.l., 43100 Parma (IT)
(72) Inventor: Zinelli, Raffaele c/o Marconi S.R.L., 43100 Parma (IT)
(74) Representative: Corradini, Corrado

(57) **Abstract**

A security device for valve assemblies provided with an external threaded plug (7) for protecting the respective valving member, comprising a plug covering cap (2, 12) generally in the shape of a cup the inner diameter of which exceeds the outer diameter of the plug, and provided at its mouth an anti-withdrawal member (22) arranged to engage the base of said plug.

## Description

The present invention relates to a security device, a typical but not exclusive use of which is in air conditioning systems, generally air conditioning systems for motor vehicles.

Specific reference will be made hereinafter to the said air conditioning systems for motor vehicles, it being understood that the ensuing description is also valid for other fields, such as the procurement of technical and industrial gases provided in cylinders and vessels.

Said air conditioning systems, which it is not necessary to describe in detail, comprise a closed circuit containing a refrigerant gas, for example of HFC type, and provided with suitable service valves, such as filling and emptying valves.

Specifically, the body of said valves is fixed, usually brazed, into a metal pipe of said circuit, a threaded plug for protecting the valving member being associated with said body.

As known to the expert of this specific sector, specific international regulations valid also in Italy require that in modern air conditioning systems the service valves differ according to the type of refrigerant used, which must be of ecological type, such as HFC, or of a low environmental impact type (known also as transition type), such as HCFC.

However many vehicles are still in circulation in which the air conditioning system has not been adapted to the said regulations, and contains harmful refrigerants such as CFC or transition refrigerants, and have standard service valves, i.e. of the same type whatever the refrigerant.

It should also be noted that ecological and transition refrigerants, for example of HFC and HCFC type, must be recycled once recovered from the system, whereas recovered non-ecological refrigerants, such as the said CFCs, must be assigned to specialized disposal centres, the reason for which will be apparent hereinafter.

The above situation can give rise of various problems, generally imputable to the fact that the protection plug for the service valves of such systems can be removed by simply unscrewing, enabling any person in addition to the original installer to operate on the system.

For example it can happen, as indeed it has happened, that the owner of a motor vehicle fitted with an air conditioning system still under guarantee but requiring maintenance firstly unsuccessfully approaches another installer/maintenance firm, then approaches the original installer requiring him to put the system in operating order without cost under the terms of the guarantee, with undesirable results in terms for example of arguments.

In such situations, in particular if the system comprises standard valves, it can also happen that said other installer indeed effects the repair or maintenance but then fills the system with a refrigerant completely different from the original, generally resulting in malfunction of the system.

Moreover, seeing that to repair or maintain the system it has generally to be emptied, effected by suitable equipment which temporarily stores the extracted refrigerant, this latter can mix with other refrigerants present in said equipment, which can also be considerably different both in terms of its technical characteristics and in terms of its pollutant capacity.

However this is not all. The refrigerant, or rather the mixture of refrigerants remaining in the equipment, is generally used for other air conditioning systems, with the stated consequences.

Moreover, when the mixture present in the equipment has been recovered it may again be recycled rather than be assigned to a specialist collection centre if unknown to the maintenance firm or installer it is pollutant, for example it contains CFC.

To overcome said problems a security system is known for application to the protection plugs of the service valves of such air conditioning systems.

It comprises a sleeve of heat-shrinkable material which is drawn over the plug so that its insertion end lies beyond the base of the plug, after which the sleeve is heated to cause it to tightly adhere to the plug, by which said insertion end shrinks below the plug base, to form a collar which encloses the valve body.

A problem connected with said known system derives from the fact that to cause said sleeve to correctly shrink a relatively high temperature heat source must be used, such as a hot air gun or a flame nozzle, which is extremely inconvenient because the work generally has to be done within an engine compartment in which either flammable or heat-sensitive materials are present, such as grease, fuel vapour, electric and electronic cabling, plastic and rubber elements and painted parts.

Again, it is often extremely difficult, if not impossible, to carry out said operations because the air conditioning system is located within narrow and difficultly accessible regions of the engine compartment.

In addition to this, the base of the protection plug of said service valves is often so close to the pipe to which the valve is connected as to prevent the insertion end of the sleeve, at the moment of heating, from reaching the valve body and from tightening about it, where an undercut zone is often provided.

In such circumstances the mounted sleeve, which is in a stretched condition, forms a simple sheath which merely covers the plug, which can hence be unscrewed by anyone without any indication that this has occurred, so virtually nullifying the application of the safety system.

The main object of this invention is to obviate the aforesaid within the context of a simple, rational and low-cost construction which is easy to use and is secure from the security aspect.

Said object is attained by a device presenting the characterising elements indicated in the claims.

In a totally general sense it consists of a disposable anti-tamper cap which, once mounted on the protection plug of a valve assembly, such as a service valve of an air conditioning system for motor vehicles, prevents unscrewing of said plug and, if forced, suffers damage such as to indicate that unauthorized intervention has taken place.

More specifically, said cap is of generally cylindrical form, being shaped as a cup the inner diameter of which exceeds the outer diameter of the plug, and presents at its mouth an anti-withdrawal member arranged to engage the base of the plug.

Said disposable cap can be of sectional type, and comprise at least two complementary parts joined together or not, such as two half-shells symmetrically disposed about the longitudinal axis of said cup profile, and connectable together by locking means of irreversible engagement, as described hereinafter.

The cap is preferably thin, and preferably consists of a relatively fragile rigid material, such as polypropylene filled with talc or other similar material.

By virtue of the aforesaid solution all the objects of the invention are attained.

In this respect, the device of the invention can be advantageously mounted on a protection plug without the use of heat sources.

Moreover said mounting can be effected with one hand, especially if the two constituent half-shells of the cap are joined together before being applied to the plug.

By this means the device can be mounted without problem even when the service valve is located in a narrow and/or deep region of the engine compartment of a motor vehicle.

In addition, the presence of said anti-withdrawal member provided on the mouth of the cap ensures that the cap engages the base of the plug even when said base lies against the pipe to which the service valve is connected.

The constructional characteristics and merits of the invention will be apparent from the ensuing detailed description, given with reference to the figures of the accompanying drawings which show a particular preferred embodiment thereof by way of non-limiting example.

Figure 1 is a perspective view showing the device in its disassembled configuration.

Figure 2 is the section II-II of Figure 1.

Figure 3 is a sectional view showing the device mounted on a service valve of an air conditioning system for motor vehicles.

Figure 4 is the section IV-IV of Figure 3.

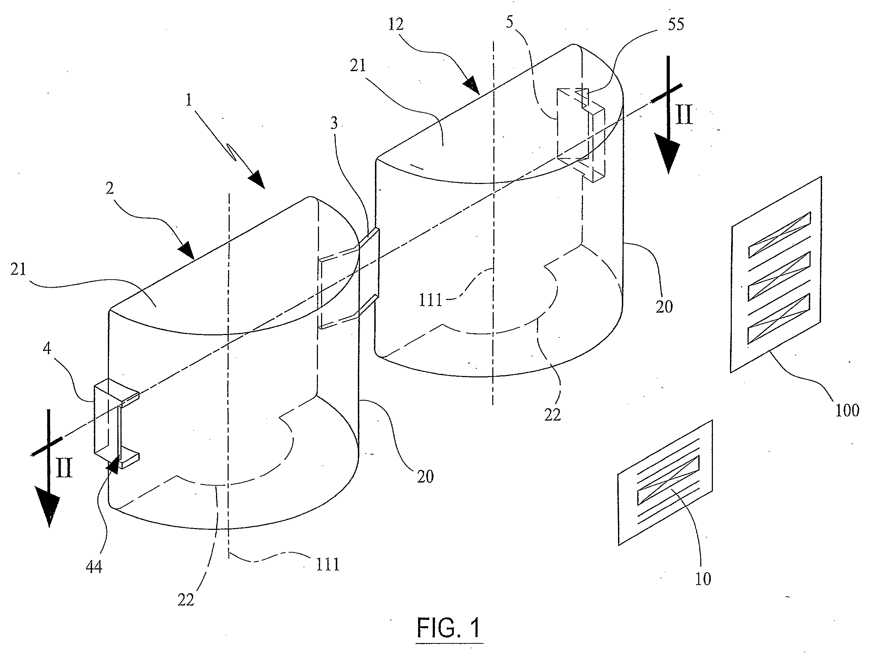

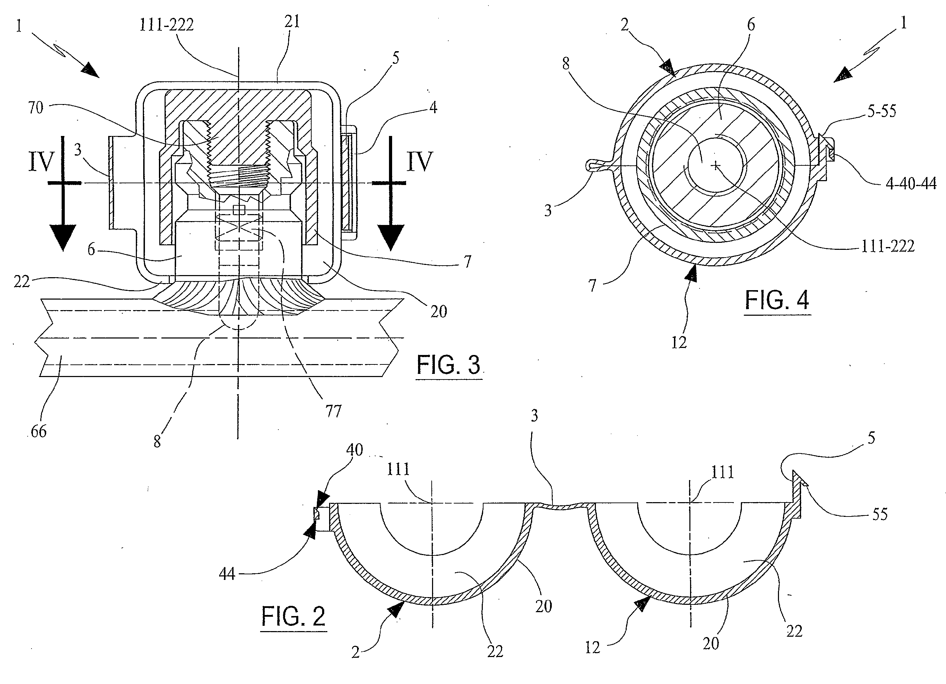

Said figures, and in particular Figure 1, show a sectional cap, indicated overall by the reference numeral 1, a first identification plate 10 to be applied to the cap 1 once mounted as shown in Figure 3, and a second identification plate 100 to be applied to a suitable point on the motor vehicle.

Appropriate data and information, for example the progressive number of the cap 1, mounting date, system model, type of gas, and details of the installer/maintenance firm, are reproduced on said first 10 and said second 100 identification plate.

At least said first plate 10 has anti-tamper characteristics, for example being in the form of an adhesive label suitably formed and treated to degrade, for example to tear, if attempts are made to remove and/or to alter the data carried by it.

Said sectional cap 1 comprises two generally thin complementary half-shells 2, 12 which, once assembled as shown in Figures 3 and 4, assume the form of a cup the mouth of which presents an anti-withdrawal element .

Each individual half-shell 2, 12 comprises a semi-cylindrical part 20 which at one end is closed by a transverse semicircular plate 21 and at the other end presents a circumferential flange 22 extending inwards along its entire extension.

It should be noted that the inner diameter of the wall 20 exceeds the outer diameter of the respective protection plug 7 (see Figures 3 and 4), and that the inner diameter of the flange 22 is less than said outer diameter of the plug 7.

Said half-shells 2 and 12, and other elements to be stated, are obtained by moulding, for example injection moulding, starting from suitable material, such as a synthetic material generally of rigid type.

For the purposes of the invention, said starting material is preferably generally fragile. For example it can consist of polypropylene with talc as filler.

The two adjacent longitudinal abutting edges of the two half-shells 2, 12 are joined together in the manner of a book by a U-piece 3 with predetermined bending, the thickness of which is less than that of the half-shells 1 (see Figures 2 and 4). More than one U-piece can be provided.

With the opposing longitudinal abutting edges of the half-shells 2, 12 there is associated a locking system with irreversible engagement. It comprises a lateral bridge 4 connected to the half-shell 2 and a projecting front hook joined to the half-shell 12, and having a width exceeding the corresponding dimension of the aperture in said bridge (see Figure 2).

The tip of said hook 5 is in the form of an outer inclined fin 55, the crosspiece of said bridge 4 presenting at its front an internal guide bevel for said fin 55, and at its rear a recess 44 for receiving and retaining said fin 55.

The longitudinal axis of the half-shells 2 and 12 is indicated by 111 in Figures 1 and 2, said axis 111 coinciding substantially with the longitudinal axis of the assembled, i.e. mounted cap 1, and with that 222 of the service valve shown in Figures 3 and 4.

The valve comprises a valve body 6 which is welded to a metal pipe 66 of a known air conditioning system for motor vehicles.

Said valve body 6 presents a through hole 8 of differential cross-sections which comprises, starting from said pipe 66, a smooth initial portion of lesser diameter which opens into the pipe 66, an intermediate threaded portion of greater diameter into which the valving member 77 is screwed, and a threaded end portion of even greater diameter into which the inner threaded stem 70 of a protection plug 7 is screwed.

The plug 7 is cup-shaped, the free circumferential edge of its skirt lying in front of the welding seam which joins the valve body 6 to the metal pipe 66.

The cap 1 is mounted by resting one of the half-shells 2 or 12 against a side region of the plug 7, with the flange 32 positioned below the base of the plug 7, after which the other half-shell 12 or 2 is closed onto the preceding, to snap-lock the bridge 4 over the hook 5.

At this point the cap 1 can no longer be separated from the plug 7 without losing its integrity. In particular, the plug 7 cannot be unscrewed because the cap 1 is idle, and this latter cannot be withdrawn axially without breaking the flange 22.

It is also impossible to gain access to the plug 7 by acting either on the U-piece 3 or on the snap-locking system of irreversible engagement.

The merits and advantages of the invention are apparent from the aforegoing and from an examination of the accompanying figures.

It should be noted that the illustrated solution is not the only one possible or feasible.

For example the cap 1 can comprise three complementary parts having a circumferential extension of about 120°, joined together in pairs by a pair of U-pieces 3, of which the first and last are provided with the said locking system 4-5.

The U-piece 3 can also be omitted and the two half-shells 2 and 12 can present, on their mating abutting edges, two snap-locking systems 4-5 with irreversible engagement.

As a variant the cap 1 can be formed as a one-piece cup during its moulding. In this case its mouth is fitted with an inwardly extending lip inclined towards the bottom of said cup shape, said lip, on mounting the cap by drawing it axially over the plug 7, being made to irreversibly snap-engage below the base of the plug 7.

Moreover said talc-filled polypropylene is not the only material suitable for forming the half-shells 2 and 12, whether or not joined together. For example, said half-shells can be formed of sheet metal, in which case to gain access to the plug 7 pincers or shears would be required to break either the U-piece 3 or the locking system 4-5.

## Claims

1. A security device for valve assemblies provided with an external threaded plug for protecting the respective valving member, **characterised by** comprising a plug covering cap generally in the shape of a cup the inner diameter of which exceeds the outer diameter of the plug, and provided at its mouth with an anti-withdrawal member arranged to engage the base of said plug.

2. A device as claimed in claim 1, **characterised in that** said cap is in one piece.

3. A device as claimed in claim 2, **characterised in that** said anti-withdrawal member comprises an inwardly extending lip inclined towards the bottom of said cup shape, and having an inner diameter less than the outer diameter of the plug.

4. A device as claimed in claim 1, **characterised in that** said cap is of sectional type, and comprises at least two complementary parts known as two half-shells, symmetrically disposed about the longitudinal axis of said cap, each comprising a respective portion of said cup shape, and of said anti-withdrawal member, such as an inwardly extending circumferential flange having an inner diameter less than the outer diameter of the plug.

5. A device as claimed in claim 4, **characterised in that** said at least two complementary parts are hinged together in the manner of a book along a first pair of abutting longitudinal edges, with the second pair of abutting edges there being associated a locking system of irreversible engagement.

6. A device as claimed in claim 5, **characterised in that** said book-type hinge is in the form of at least one U-piece of material with a predetermined bending region.

7. A device as claimed in claim 5, **characterised in that** said locking system comprises a hook associated with an edge of said second pair, and an engagement seat associated with the other edge of said second pair and arranged to prevent withdrawal of said hook.

8. A device as claimed in claim 4, **characterised in that** said at least two complementary parts are separate and present, on the two abutting pairs of mating longitudinal edges, respective locking systems with irreversible engagement.

9. A device as claimed in claim 8, **characterised in that** said locking systems each comprise a hook associated with an abutting edge of each pair, and an engagement seat associated with the other edge of the same pair, and arranged to prevent withdrawal of said hook.

10. A device as claimed in claim 1, **characterised in that** said cap is of generally small thickness, and is formed of a generally rigid material.

11. A device as claimed in claim 10, **characterised in that** said cap is formed of sheet metal.

12. A device as claimed in claim 10, **characterised in that** said cap is formed of a synthetic material.

13. A device as claimed in claim 10, **characterised in that** said generally rigid material is a generally fragile material.

14. A device as claimed in claim 13, **characterised in that** said generally fragile material is polypropylene filled with talc.

15. A device as claimed in claim 1, **characterised by** comprising at least one identification plate intended to be fitted to the mounted cap and possessing anti-tamper properties, such as an adhesive label generally unable to remain integral if pulled to remove it or if surface-scraped.

16. A device as claimed in claim 1, **characterised by** comprising at least one further identification plate, such as an adhesive label, intended to be fitted to a site relative to the region or structure with which said service valve is associated.

17. An air conditioning system, such as an air conditioning system for motor vehicles, **characterised by** being provided with at least one security device as claimed in claims from 1 to 16.
